(19) Europäisches Patentamt
European Patent Office
Office européen des brevets

(11) EP 1 196 478 B1

(12) EUROPÄISCHE PATENTSCHRIFT

(45) Veröffentlichungstag und Bekanntmachung des Hinweises auf die Patenterteilung:
**13.08.2003 Patentblatt 2003/33**

(21) Anmeldenummer: **00947787.8**

(22) Anmeldetag: **31.05.2000**

(51) Int Cl.[7]: **C08G 77/06**, C08G 77/14

(86) Internationale Anmeldenummer:
**PCT/DE00/01833**

(87) Internationale Veröffentlichungsnummer:
**WO 01/004186 (18.01.2001 Gazette 2001/03)**

(54) **ORGANISCH MODIFIZIERTE KIESELSAEUREPOLYKONDENSATE, DEREN HERSTELLUNG UND DEREN VERWENDUNG**

ORGANICALLY MODIFIED SILIC ACID POLYCONDENSATES, PRODUCTION AND USE THEREOF

POLYCONDENSATS D'ACIDE SILICIQUE MODIFIES ORGANIQUEMENT, LEUR PRODUCTION ET LEUR UTILISATION

(84) Benannte Vertragsstaaten:
**AT BE CH CY DE DK ES FI FR GB GR IE IT LI LU MC NL PT SE**

(30) Priorität: **13.07.1999 DE 19932629**

(43) Veröffentlichungstag der Anmeldung:
**17.04.2002 Patentblatt 2002/16**

(73) Patentinhaber: **Fraunhofer-Gesellschaft zur Förderung der angewandten Forschung e.V.
80636 München (DE)**

(72) Erfinder:
- **ROSCHER, Christof
D-97080 Würzburg (DE)**
- **BUESTRICH, Ralf
D-97080 Würzburg (DE)**

(56) Entgegenhaltungen:
**EP-A- 0 812 894** **DE-C- 19 613 650**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 196 478 B1

Printed by Jouve, 75001 PARIS (FR)

## Beschreibung

Die Erfindung betrifft organisch modifizierte, lagerstabile, UV-härtbare, NIR-durchlässige und in Schichtdicken von 1 bis 150 µm fotostrukturierbare Kieselsäurepolykondensate, deren Herstellung und deren Verwendung.

Organisch modifizierte Kieselsäurepolykondensate finden eine breite Anwendung, z.B. als Beschichtungen für die unterschiedlichsten Substrate oder bei der Herstellung von Formkörpern. Gegenüber rein organischen Polymeren zeigen organisch modifizierte Kieselsäurepolykondensate eine Reihe von vorteilhaften Eigenschaften, wie z. B. höhere Temperaturbeständigkeit und Temperaturformbeständigkeit, bessere Haftung etc..

Organisch modifizierte Kieselsäurepolykondensate nach dem Stand der Technik werden über wässrige Sol-Gel-Synthesen, d.h. über hydrolytische Kondensationsreaktionen erhalten, und sie weisen deshalb Si-OH-Gruppen auf. Nachteil dieser Si-OH-Gruppen enthaltenden, organisch modifizierten Kieselsäurepolykondensate ist die schlechte Reproduzierbarkeit ihrer Synthese und die mangelhafte Lagerstabilität. Die im System enthaltenen Si-OH-Gruppen reagieren schleichend unter Selbstkondensation, was zu einem Viskositätsanstieg des Systems führt.

Ein weiterer Nachteil dieser Systeme ist der große Schwund und die Rissbildung bei der Applikation. Si-OH-Gruppen enthaltende Systeme setzen bei der thermischen Härtung unter Schrumpfung Wasser und Alkohol frei. Die Schrumpfung bzw. der Austritt flüchtiger Komponenten führt insbesondere bei höheren Schichtdicken zur Rissbildung.

Diese anorganische Nachkondensation ist insbesondere bei strukturierbaren Materialien sehr nachteilig. Vor der Strukturgebung durch organische Polymerisation sollte die anorganische Oligomer-Bildung bereits abgeschlossen sein, denn nach der organischen Polymerisation ist die Beweglichkeit der Si-OH-Gruppen eingeschränkt. Ist die anorganische Oligomer-Bildung nicht abgeschlossen, verbleiben SiOH-Gruppen im System und führen zu einer erhöhten Wasseraufnahme.

Ein weiterer Nachteil dieser Systeme ist deren hohe Absorption durch die Si-OH-Gruppen im NIR-Bereich, insbesondere bei der für die optische Datenverarbeitung so wichtigen Wellenlänge von 1550 nm.

Aufgabe dieser Erfindung ist es deshalb, Materialien für Beschichtungen und für die Herstellung von Formkörpern bereit zu stellen, die lagerstabil, UV-härtbar, NIRdurchlässig und auch in hohen Schichtdicken fotostrukturierbar sind. Diese Materialien sollen auf den verschiedensten Substraten haften und sie sollen mit üblichen Methoden appliziert werden können.

Gelöst wird diese Aufgabe durch organisch modifizierte Kieselsäurepolykondensate, die durch Kondensation von einem oder mehreren organisch modifizierten Silandiolen der allgemeinen Formel I

$$Ar_2Si(OH)_2 \qquad (I)$$

mit einem oder mehreren organisch modifizierten Silanen der allgemeinen Formel II,

$$RSi(OR')_3 \qquad (II)$$

erhältlich sind. An Stelle der monomeren Verbindungen der allgemeinen Formel I können zur Herstellung der erfindungsgemäßen Kieselsäurepolykondensate auch davon abgeleitete Vorkondensate oder Mischungen aus Monomeren und Vorkondensaten eingesetzt werden. Das molare Verhältnis der Verbindungen I und II, bezogen auf die Monomeren, beträgt 1 : 1.

Bis zu 90 Mol-% der Verbindung der allgemeinen Formel II können durch eine oder mehrere co-kondensierbare Verbindungen des Bors, des Aluminiums, des Siliciums, des Germaniums, des Titans und des Zirkoniums ersetzt sein. Werden Verbindungen der allgemeinen Formel II durch diese co-kondensierbaren Verbindungen ersetzt, so ändert sich selbstverständlich das molare Verhältnis der Verbindungen I und II. Beim Ersatz von Verbindungen der allgemeinen Formel II durch co-kondensierbare Verbindungen ist darauf zu achten, dass die Menge der kondensierbaren Gruppen der Verbindung II durch eine äquivalente Menge an co-kondensierbaren Gruppen ersetzt wird. Dabei ist zu berücksichtigen, dass in der Verbindung der allgemeinen Formel II nur zwei der drei Alkoxy-Gruppen zur Kondensation befähigt sind.

Die Reste der allgemeinen Formeln I und II sind gleich oder verschieden und haben folgende Bedeutung:

Ar = ein Rest mit 6 bis 20 Kohlenstoff-Atomen und mit mindestens einer aromatischen Gruppe,
R = ein organischer Rest mit 2 bis 15 Kohlenstoff-Atomen und mit mindestens einer Epoxy-Gruppe und/oder mit mindestens einer C=C-Doppelbindung
R' = Methyl oder Ethyl.

Silane der allgemeinen Formel II sind über die Reste OR' mit Silandiolen der allgemeinen Formel I, unter Abspaltung von Methanol bzw. Ethanol, kondensierbar. Im Zuge der Kondensation wird ein anorganisches Netzwerk mit Si-O-Si-Brücken aufgebaut. Die freien Valenzen der Silicium-Atome sind mit Ar-, R- und R'O-Resten abgesättigt. Das allgemeine Reaktionsschema der Kondensation sieht wie folgt aus:

$$n\ Ar_2Si(OH)_2 + n\ RSi(OR')_3 \rightarrow \text{Polykondensat} + 2n\ R'OH$$

Silane der allgemeinen Formel II sind außerdem über die Epoxy-Gruppen bzw. über die C=C-Doppelbindungen der Reste R polymerisierbar. Über die Polymerisation der Reste R wird ein organisches Netzwerk aufgebaut.

In bevorzugten Ausführungsformen der erfindungsgemäßen Kieselsäurepolykondensate bedeutet der Rest Ar der allgemeinen Formel I einen substituierten oder unsubstituierten aromatischen Rest. Besonders bevorzugt ist es, wenn Ar Phenyl, Tolyl, Styryl oder Naphthyl bedeutet. Konkrete Beispiele für Verbindungen der allgemeinen Formel sind

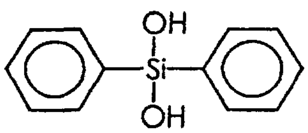
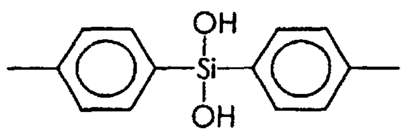
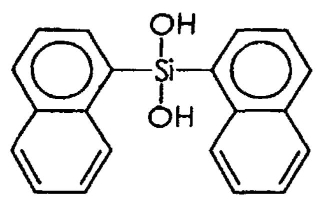

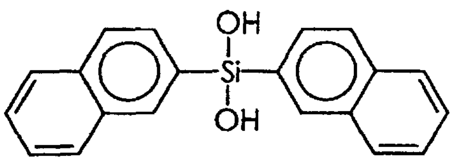
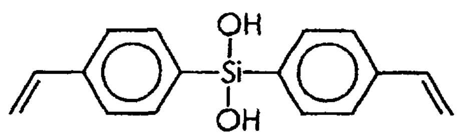

Verbindungen der allgemeinen Formel I sind käuflich erwerbbar oder nach Methoden herstellbar, wie sie z. B. in "Chemie und Technologie der Silicone" (Walter Noll, Verlag Chemie, Weinheim/Bergstraße, 1986) beschrieben sind.

Ohne Einschränkung der Allgemeinheit sind konkrete Beispiele für Verbindungen der allgemeinen Formel II

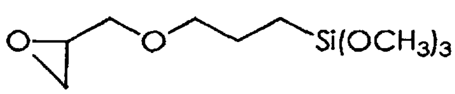
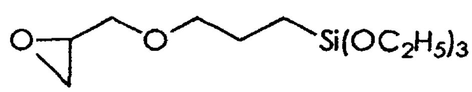

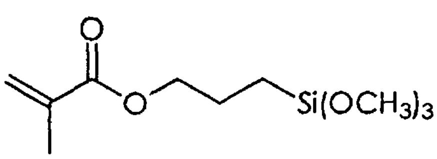
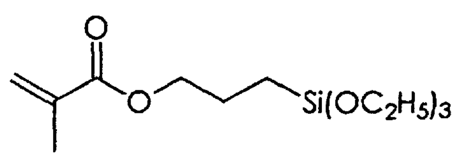

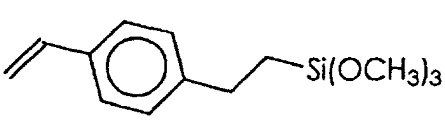
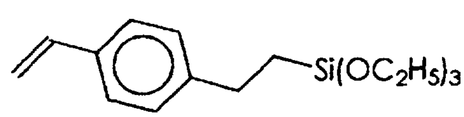

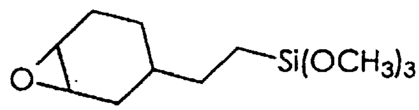
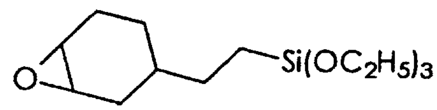

Weitere konkrete Ausgestaltungen der Reste R sehen z.B. wie folgt aus:

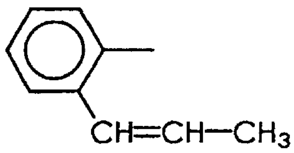 , 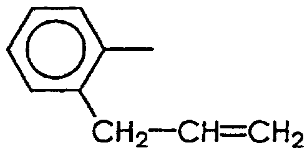 , 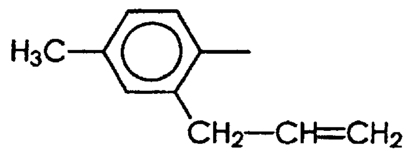 ,

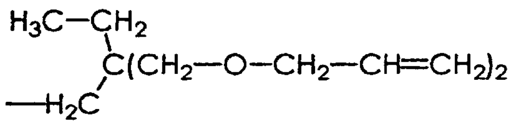
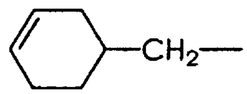
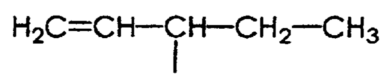

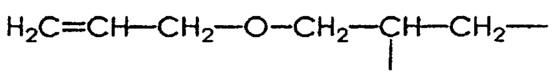 , 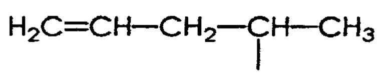 ,

$CH_2$=CH-O-$(CH_2)_3$-$CH_2$-, $CH_2$=CH-CO-NH-$CH_2$-, $CH_2$=CH-$CH_2$-, $CH_2$=CH-$(CH_2)_3$-, $CH_2$=CH-$(CH_2)_2$-,

In bevorzugten Ausführungsformen der erfindungsgemäßen Polykondensate enthält der Rest R in Verbindungen der allgemeinen Formel II eine oder mehrere Acryl- und/oder Methacryl-Gruppen. Ohne Einschränkung der Allgemeinheit sind konkrete Ausgestaltungen derartiger Reste R

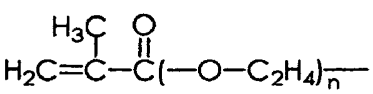 mit n = 1 bis 9, 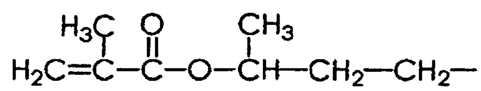

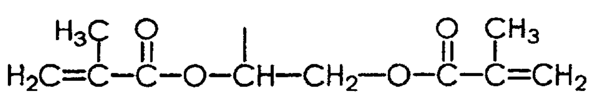 , 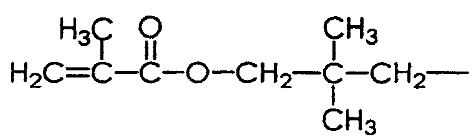

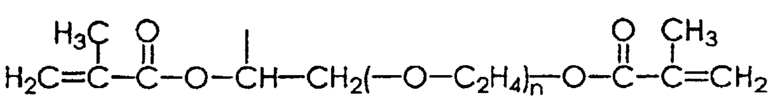 mit n = 1 bis 9,

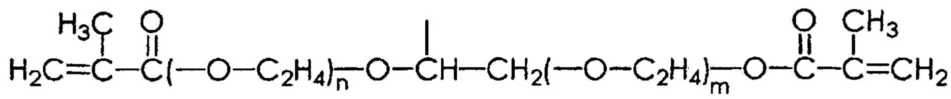

mit m und n = 1 bis 6 und m + n = 2 bis 8,

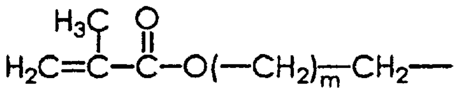

mit m = 1 bis 11,

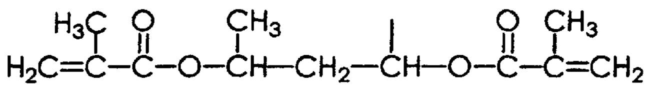

,

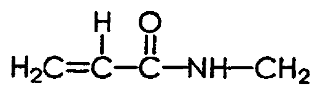

,

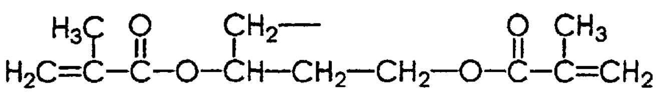

,

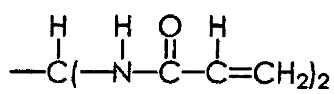

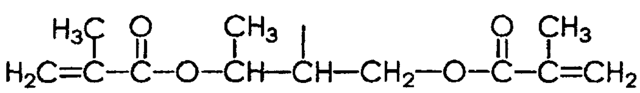

,

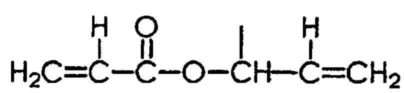

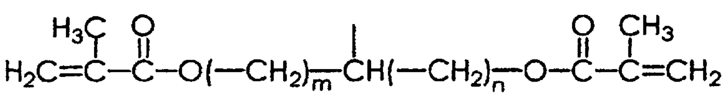

mit n, m und m+n = 0 bis 11,

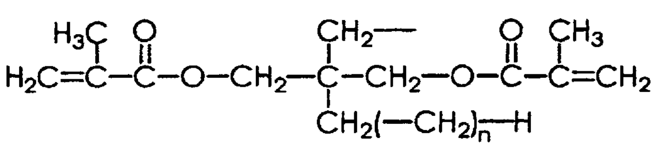

mit n = 0 und 1,

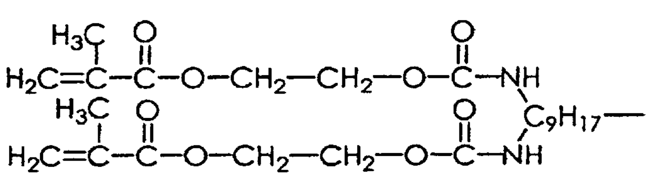

,

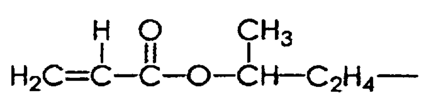

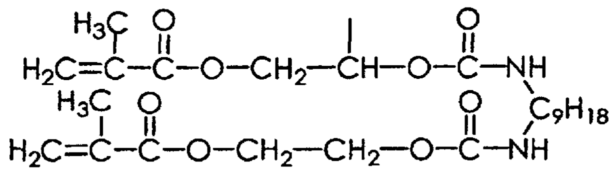

,

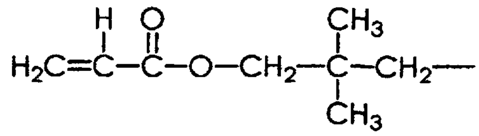

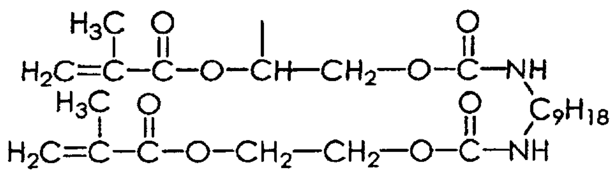

,

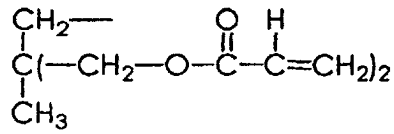

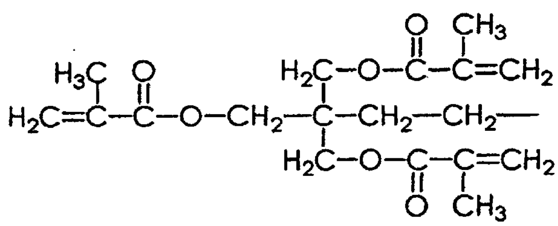

,

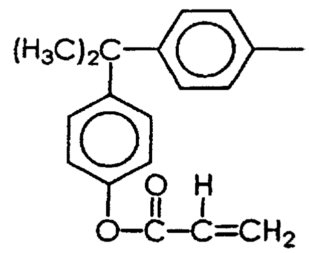

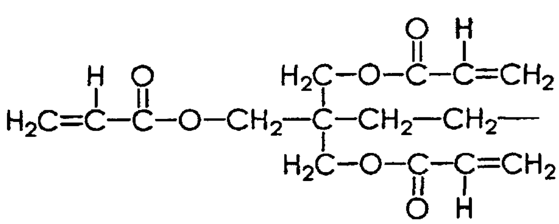

,

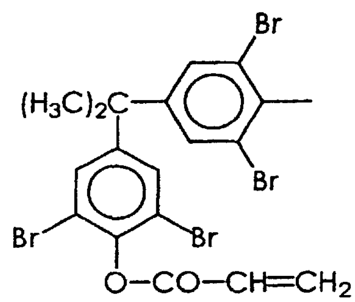

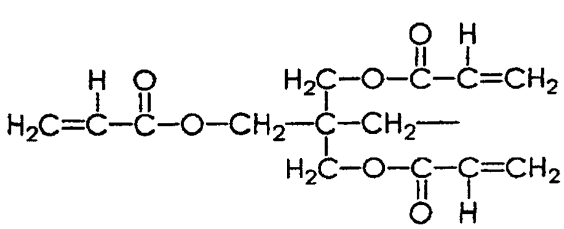

,

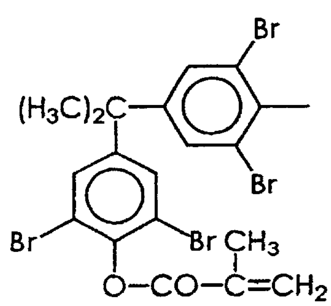

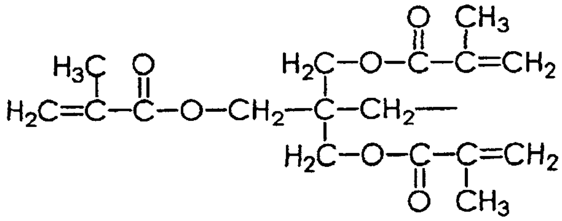

,

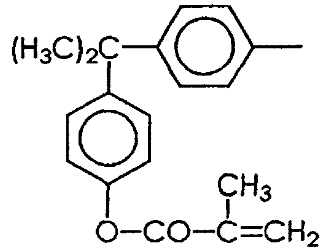

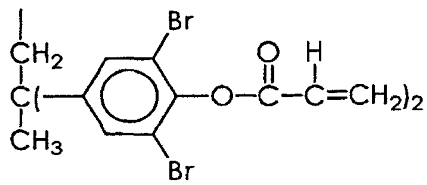

,

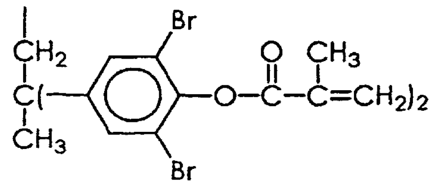

,

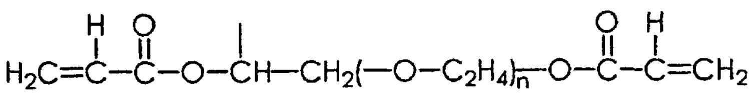

mit n = 0 bis 9,

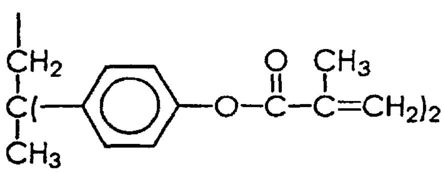

,

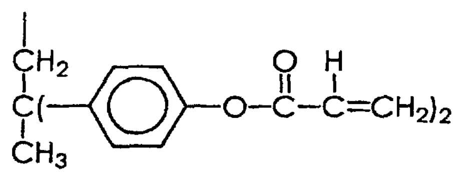

,

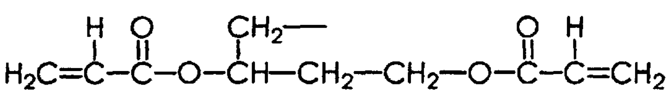

,

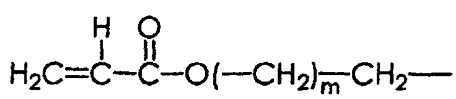

,

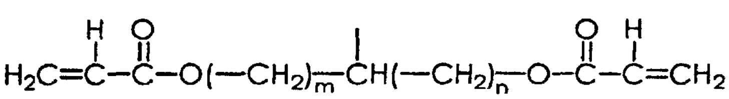

mit n, m und n+m = 0 bis 11,

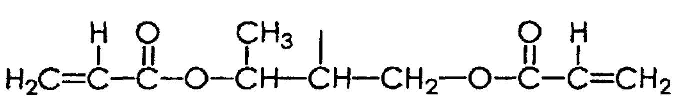

.,

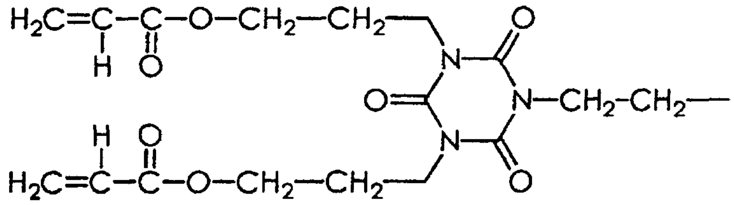

,

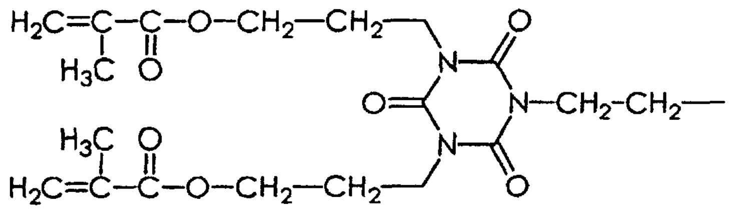

,

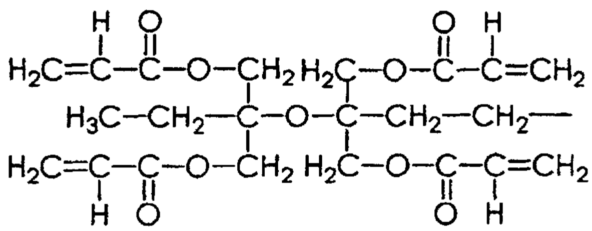

,

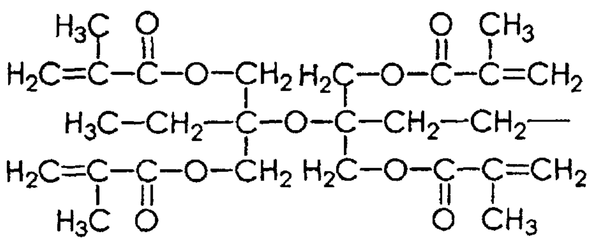

.

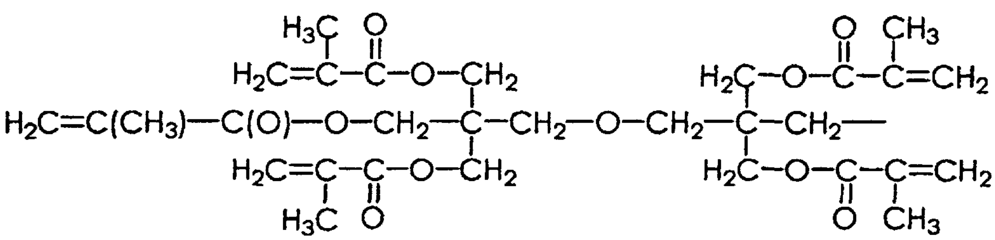

,

Verbindungen der allgemeinen Formel II sind käuflich erwerbbar oder nach Methoden herstellbar, wie sie z. B. in "Chemie und Technologie der Silicone" (Walter Noll, Verlag Chemie, Weinheim/Bergstraße, 1986) beschrieben sind.

Zum Aufbau des anorganischen Netzwerkes und zur Herstellung der erfindungsgemäßen Kieselsäurepolykondensate werden die Verbindungen der allgemeinen Formel I und II kondensiert. Die Polykondensation erfolgt vorzugsweise nach dem Sol-Gel-Verfahren und bei Temperaturen zwischen 20 und 100 °C, bevorzugt zwischen 50 und 100 °C, bzw. dem Siedepunkt der am niedrigsten siedenden Komponente. Besonders bevorzugt erfolgt die Kondensation bei der Siedetemperatur des Methanols. Nach der Kondensation werden die flüchtigen Bestandteile durch übliche Methoden, z.B. durch Erwärmen und/oder Unterdruck, entfernt.

Zur Einleitung bzw. Beschleunigung der Kondensation können Lewis- oder Brönstedt-Basen eingesetzt werden. Beispiele hierfür sind Amine, wie z.B. N-Methylimidazol oder Benzyldimethylamin. In bevorzugten Ausführungsformen wird als Base Triethylamin, Ammoniumfluorid oder eines oder mehrere Erdalkalihydroxid verwendet. Besonders bevorzugt wird als Erdalkalihydroxid Bariumhydroxid eingesetzt. Werden im Reaktionsmedium unlösliche Basen eingesetzt, wie z.B. Erdalkalihydroxide, so empfiehlt es sich, diese nach beendeter Kondensation aus der resultierenden Mischung abzutrennen, z.B. durch Filtration. Ferner können für die Kondensation, an Stelle der vorgenannten Basen, chelatisierte oder nicht-chelatisierte Aluminium- oder Zirkoniumalkoxide verwendet werden.

Zur Herstellung der erfindungsgemäßen Polykondensate können bis zu 90 Mol-% der Verbindungen der allgemeinen Formel II durch eine oder mehrere co-kondensierbare Verbindungen des Bors, des Aluminiums, des Siliciums, des Germaniums, des Titans und des Zirkoniums ersetzt werden.

In einer weiteren Ausgestaltung der erfindungsgemäßen Kieselsäurepolykondensate sind Verbindungen der allgemeinen Formel II durch eine oder mehrere cokondensierbare Verbindungen der allgemeinen Formel III ersetzt.

$$M(OR'')_3 \qquad (III)$$

Die Reste R" sind gleich oder verschieden, M bedeutet Bor oder Aluminium und R" stellt einen Alkyl-Rest mit 1 bis 4 Kohlenstoff-Atomen dar. In der allgemeinen Formel III sind alle drei Alkoxy-Reste mit Verbindungen der allgemeinen Formel I co-kondensierbar, so dass der Ersatz von Verbindungen der allgemeinen Formel II durch Verbindungen der allgemeinen Formel III im molaren Verhältnis 3 : 2 erfolgt. D.h. jeweils drei Moleküle der Verbindung II werden durch zwei Moleküle der Verbindung III ersetzt.

Konkrete Beispiele für Verbindungen der allgemeinen Formel III sind $Al(OCH_3)_3$, $Al(OC_2H_5)_3$, $Al(O\text{-}n\text{-}C_3H_7)_3$, $Al(O\text{-}i\text{-}C_3H_7)_3$, $Al(O\text{-}n\text{-}C_4H_9)_3$, $Al(O\text{-}i\text{-}C_4H_9)_3$, $Al(O\text{-}s\text{-}C_4H_9)_3$, $B(O\text{-}n\text{-}C_4H_9)_3$, $B(O\text{-}t\text{-}C_4H_9)_3$, $B(O\text{-}n\text{-}C_3H_7)_3$, $B(O\text{-}i\text{-}C_3H_7)_3$, $B(OCH_3)_3$ und $B(OC_2H_5)_3$.

Werden Verbindungen der allgemeinen Formel II teilweise durch die oben genannten Aluminium- und Bor-Verbindungen ersetzt, so ist die Zugabe einer Base zur Durchführung der Kondensation ist nicht mehr erforderlich. Die oben genannten Aluminium- und Bor-Verbindungen übemehmen die Funktion des Kondensationskatalysators. Ein weiterer Vorteil dieser Variante liegt darin, dass nach beendeter Kondensation überschüssiger Kondensationskatalysator nicht mehr aus dem Reaktionsmedium entfernt werden muss, da kein freier Kondensationskatalysator mehr vorliegt. Er ist vollständig in das anorganische Netzwerk eingebaut.

Durch den Einbau von Aluminium- und/oder Bor-Atomen in das anorganische Netzwerk wird die Härte und die chemische Resistenz des resultierenden Polykondensats erhöht.

In einer weiteren Ausgestaltung der erfindungsgemäßen Kieselsäurepolykondensate sind Verbindungen der allgemeinen Formel II ersetzt durch eine oder mehrere co-kondensierbare Verbindungen der allgemeinen Formel IV.

$$M'(OR'')_4 \qquad (IV)$$

Die Reste R" sind gleich oder verschieden, M' bedeutet Silicium, Germanium, Titan oder Zirkonium und R" stellt einen Alkyl-Rest mit 1 bis 4 Kohlenstoff-Atomen dar. In der allgemeinen Formel IV sind alle vier Alkoxy-Reste mit Verbindungen der allgemeinen Formel I co-kondensierbar, so dass der Ersatz von Verbindungen der allgemeinen Formel II durch Verbindungen der allgemeinen Formel IV im molaren Verhältnis 2 : 1 erfolgt. D.h. jeweils zwei Moleküle der Verbindung II werden durch ein Molekül der Verbindung IV ersetzt.

Konkrete Beispiele für Verbindungen der allgemeinen Formel IV sind $Si(OCH_3)_4$, $Si(OC_2H_5)_4$, $Si(O\text{-}n\text{-}C_3H_7)_4$, $Si(O\text{-}i\text{-}C_3H_7)_4$, $Si(O\text{-}n\text{-}C_4H_9)_4$, $Si(O\text{-}i\text{-}C_4H_9)_4$, $Si(O\text{-}s\text{-}C_4H_9)_4$, $Ge(OCH_3)_4$, $Ge(OC_2H_5)_4$, $Ge(O\text{-}n\text{-}C_3H_7)_4$, $Ge(O\text{-}i\text{-}C_3H_7)_4$, $Ge(O\text{-}n\text{-}C_4H_9)_4$, $Ge(O\text{-}i\text{-}C_4H_9)_4$, $Ge(O\text{-}s\text{-}C_4H_9)_4$, $Ti(OCH_3)_4$, $Ti(OC_2H_5)_4$, $Ti(O\text{-}n\text{-}C_3H_7)_4$, $Ti(O\text{-}i\text{-}C_3H_7)_4$, $Ti(O\text{-}n\text{-}C_4H_9)_4$, $Ti(O\text{-}i\text{-}C_4H_9)_4$, $Ti(O\text{-}s\text{-}C_4H_9)_4$, $Zr(OCH_3)_4$, $Zr(OC_2H_5)_4$, $Zr(O\text{-}n\text{-}C_3H_7)_4$, $Zr(O\text{-}i\text{-}C_3H_7)_4$, $Zr(O\text{-}n\text{-}C_4H_9)_4$, $Zr(O\text{-}i\text{-}C_4H_9)_4$ und $Zr(O\text{-}s\text{-}C_4H_9)_4$.

Werden Verbindungen der allgemeinen Formel II teilweise durch die oben genannten Verbindungen des Titans und des Zirkoniums ersetzt, so bewirken diese Titan- bzw. Zirkonium-Verbindungen auch die Kondensation, und die Zugabe eines Katalysators, z.B. einer Base, ist nicht mehr erforderlich. Die oben genannten Titan- und Zirkonium-Verbindungen übernehmen also die Funktion eines Kondensationskatalysators. Ein weiterer Vorteil dieser Variante liegt darin, dass nach beendeter Kondensation überschüssiger Katalysator nicht mehr aus dem Reaktionsmedium entfernt werden muss, da er vollständig in das anorganische Netzwerk eingebaut ist.

Durch den Einbau von Germanium- und/oder Titan- und/oder Zirkonium-Atomen in das anorganische Netzwerk wird zum einen, in Folge der höheren anorganischen Raumnetzdichte, die Härte und die Abrasionsbeständigkeit des resultierenden Polykondensats gesteigert. Zum andern wird der Brechungsindex des resultierenden Polykondensats zu höheren Werten verschoben. Damit kann durch den gezielten Einbau dieser Atome in das anorganische Netzwerk der Brechungsindex des resultierenden Materials gezielt eingestellt werden. Damit sind diese Materialien für den Einsatz in optischen Bauteilen hervorragend geeignet, denn in diesen ist die gezielte Einstellung des Brechungsindex, z.B. in der Lichtleitung für die Einund Auskoppelung, unbedingt erforderlich.

In weiteren Ausgestaltungen der erfindungsgemaßen Kieselsäurepolykondensate sind bis zu 90 Mol-% der Verbindungen der allgemeinen Formel II durch eine oder mehrere Verbindungen der allgemeinen Formel V ersetzt.

$$R^1Si(OR')^3 \qquad (V)$$

Die Reste R' sind gleich oder verschieden und bedeuten Methyl oder Ethyl. Der Rest $R^1$ ist ein organischer Rest mit folgender Bedeutung:

$R^1$ = $CF_3$-$(CF_2)_n$-$C_2H_4$-, mit n = 0 bis 7,
= $R^2HN$-$(CH_2)_3$-, mit $R^2$ = H, $CH_3$, $C_2H_5$ oder $C_2H_4$-$NHR^2$,
= $H_2N$-$C_2H_4$-NH-$CH_2$-$C_6H_4$-$C_2H_4$-,
= substituiertes und unsubstituiertes Alkyl mit 1 bis 8 Kohlenstoff-Atomen,
= substituiertes und unsubstituiertes Phenyl, Tolyl und Naphthyl.

Der Ersatz von Verbindungen II durch Verbindungen der allgemeinen Formel V erfolgt im molaren Verhältnis 1 : 1. Konkrete Beispiele für Verbindungen der allgemeinen Formel V sind $CF_3$-$C_2H_4$-$Si(OCH_3)_3$, $CF_3$-$CF_2$-$C_2H_4$-$Si(OCH_3)_3$, $CF_3$-$(CF_2)_2$-$C_2H_4$-$Si(OCH_3)_3$, $CF_3$-$(CF_2)_3$-$C_2H_4$-$Si(OCH_3)_3$, $CF_3$-$(CF_2)_4$-$C_2H_4$-$Si(OCH_3)_3$, $CF_3$-$(CF_2)_5$-$C_2H_4$-$Si(OCH_3)_3$, $CF_3$-$(CF_2)_6$-$C_2H_4$-$Si(OCH_3)_3$, $CF_3$-$(CF_2)_7$-$TC_2H_4$-$Si(OCH_3)_3$, $CF_3$-$C_2H_4$-$Si(OC_2H_5)_3$, $CF_3$-$CF_2$-$C_2H_4$-$Si(OC_2H_5)_3$, $CF_3$-$(CF_2)_2$-$C_2H_4$-$Si(OC_2H_5)_3$, $CF_3$-$(CF_2)_3$-$C_2H_4$-$Si(OC_2H_5)_3$, $CF_3$-$(CF_2)_4$-$C_2H_4$-$Si(OC_2H_5)_3$, $CF_3$-$(CF_2)_5$-$C_2H_4$-$Si(OC_2H_5)_3$, $H_3C$-$Si(OCH_3)_3$, $CF_3$-$(CF_2)_6$-$C_2H_4$-$Si(OC_2H_5)_3$, $CF_3$-$(CF_2)_7$-$C_2H_4$-$Si(OC_2H_5)_3$, $H_3C$-$Si(OC_2H_5)_3$, $H_5C_2$-$Si(OCH_3)_3$, $H_5C_2$-$Si(OC_2H_5)_3$, $H_7C_3$-$Si(OCH_3)_3$, $H_7C_3$-$Si(OC_2H_5)_3$,

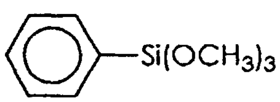 , 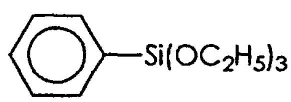 , 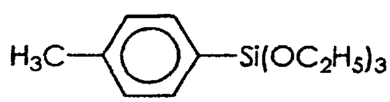 ,

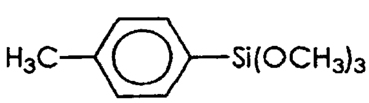 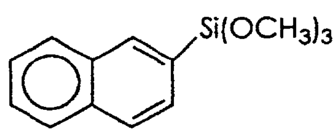 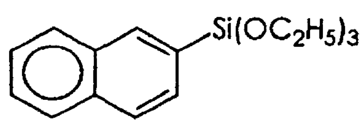

Durch den Ersatz von Verbindungen der allgemeinen Formel II durch Verbindungen der allgemeinen Formel V kann der Brechungsindex und die optische Dämpfung der erfindungsgemäßen Polykondensate den Anforderungen des jeweiligen Anwendungsfalles angepasst werden. Alkylierte Komponenten z.B. bewirken bei 1310 nm und bei 1550 nm eine Verringerung des Brechungsindex bei gleichzeitiger Erhöhung der Dämpfung. Es wird vermutet, dass dafür C-H-Oberund Kombinationsschwingungen des erfindungsgemäßen Polykondensats verantwortlich sind. Arylierte Komponenten bewirken eine Erhöhung des Brechungsindex (z.B. bei 1550 nm), ohne die Dämpfung des erfindungsgemäßen Materials signifikant zu erhöhen. Fluorierte Komponenten senken sowohl den Brechungsindex als auch die Dämpfung der erfindungsgemäßen Polykondensate.

Weitere konkrete Ausgestaltungen von Verbindungen der allgemeinen Formel V sehen wie folgt aus. $H_2N$-$(CH_2)_3$-$Si(OCH_3)_3$, $H_3C$-NH-$(CH_2)_3$-$Si(OCH_3)_3$, $H_5C_2$-NH-$(CH_2)_3$-$Si(OCH_3)_3$, $H_2N$-$C_2H_4$-NH-$(CH_2)_3$-$Si(OCH_3)_3$, $H_3C$-NH-$C_2H_4$-NH-$(CH_2)_3$-$Si(OCH_3)_3$, $H_5C_2$-NH-$C_2H_4$-NH-$(CH_2)_3$-$Si(OCH_3)_3$, $H_2N$-$(CH_2)_3$-$Si(OC_2H_5)_3$, $H_3C$-NH-

$(CH_2)_3$-$Si(OC_2H_5)_3$, $H_5C_2$-NH-$(CH_2)_3$-$Si(OC_2H_5)_3$, $H_2N$-$C_2H_4$-NH-$(CH_2)_3$-$Si(OC_2H_5)_3$, $H_3C$-NH-$C_2H_4$-NH-$(CH_2)_3$-Si$(OC_2H_5)_3$, $H_5C_2$-NH-$C_2H_4$-NH-$(CH_2)_3$-$Si(OC_2H_5)_3$, $H_2N$-$C_2H_4$-NH-$CH_2$-$C_6H_4$-$C_2H_4$-$Si(OCH_3)_3$, $H_2N$-$C_2H_4$-NH-$CH_2$-$C_6H_4$-$C_2H_4$-$Si(OC_2H_5)_3$, $H_2N$-$(CH_2)_3$-$Si(OCH_3)_3$, $H_3C$-$N(CH_3)$-$(CH_2)_3$-$Si(OCH_3)_3$, $H_5C_2$-$N(CH_3)$-$(CH_2)_3$-$Si(OCH_3)_3$, $H_2N$-$C_2H_4$-$N(CH_3)$-$(CH_2)_3$-$Si(OCH_3)_3$, $H_3C$-$N(CH_3)$-$C_2H_4$-$N(CH_3)$-$(CH_2)_3$-$Si(OCH_3)_3$, $H_5C_2$-$N(CH_3)$-$C_2H_4$-$N(CH_3)$-$(CH_2)_3$-$Si(OCH_3)_3$, $H_2N$-$(CH_2)_3$-$Si(OC_2H_5)_3$, $H_3C$-$N(CH_3)$-$(CH_2)_3$-$Si(OC_2H_5)_3$, $H_5C_2$-$N(CH_3)$-$(CH_2)_3$-$Si(OC_2H_5)_3$, $H_2N$-$C_2H_4$-$N(CH_3)$-$(CH_2)_3$-$Si(OC_2H_5)_3$, $H_3C$-$N(CH_3)$-$C_2H_4$-$N(CH_3)$-$(CH_2)_3$-$Si(OC_2H_5)_3$, $H_5C_2$-$N(CH_3)$-$C_2H_4$-$N(CH_3)$-$(CH_2)_3$-$Si(OC_2H_5)_3$, $H_2N$-$C_2H_4$-$N(CH_3)$-$CH_2$-$C_6H_4$-$C_2H_4$-$Si(OCH_3)_3$, $H_2N$-$C_2H_4$-$N(CH_3)$-$CH_2$-$C_6H_4$-$C_2H_4$-Si$(OC_2H_5)_3$, $H_2N$-$(CH_2)_3$-$Si(OCH_3)_3$, $H_3C$-$N(C_2H_5)$-$(CH_2)_3$-$Si(OCH_3)_3$, $H_5C_2$-$N(C_2H_5)$-$(CH_2)_3$-$Si(OCH_3)_3$, $H_2N$-$C_2H_4$-N$(C_2H_5)$-$(CH_2)_3$-$Si(OCH_3)_3$, $H_3C$-$N(C_2H_5)$-$C_2H_4$-$N(C_2H_5)$-$(CH_2)_3$-$Si(OCH_3)_3$, $H_5C_2$-$N(C_2H_5)$-$C_2H_4$-$N(C_2H_5)$-$(CH_2)_3$-Si$(OCH_3)_3$, $H_2N$-$(CH_2)_3$-$Si(OC_2H_5)_3$, $H_3C$-$N(C_2H_5)$-$(CH_2)_3$-$Si(OC_2H_5)_3$, $H_5C_2$-$N(C_2H_5)$-$(CH_2)_3$-$Si(OC_2H_5)_3$, $H_2N$-$C_2H_4$-N$(C_2H_5)$-$(CH_2)_3$-$Si(OC_2H_5)_3$, $H_3C$-$N(C_2H_5)$-$C_2H_4$-$N(C_2H_5)$-$(CH_2)_3$-$Si(OC_2H_5)_3$, $H_5C_2$-NH-$C_2H_4$-$N(C_2H_5)$-$(CH_2)_3$-Si$(OC_2H_5)_3$, $H_2N$-$C_2H_4$-$N(C_2H_5)$-$CH_2$-$C_6H_4$-$C_2H_4$-$Si(OCH_3)_3$, $H_2N$-$C_2H_4$-$N(C_2H_5)$-$CH_2$-$C_6H_4$-$C_2H_4$-$Si(OC_2H_5)_3$,

Werden diese Verbindungen als Ersatz für Verbindungen der allgemeinen Formel II eingesetzt, so bieten sie den großen Vorteil, dass sie als Base wirken und die Funktion des Kondensationskatalysators übernehmen. Ein weiterer Vorteil liegt darin, dass überschüssige Base nach beendeter Kondensation nicht aus dem Reaktionsmedium entfernt werden muss, da sie vollständig in das anorganische Netzwerk eingebaut ist.

In weiteren Ausgestaltungen der erfindungsgemäßen Kieselsäurepolykondensate trägt der Rest $R^1$ der allgemeinen Formel V -OH und/oder -SH und/oder -$NH_2$ Gruppen. Diese Reste verursachen zwar eine Erhöhung der Absorption im NIR, sie können aber nach der Polykondensation zur Koppelung mit anderen Bausteinen verwendet werden, wodurch die Absorption der resultierenden Materialien wieder verringert wird. Mit Hilfe der vorgenannten Reste können weitere Funktionalitäten in die resultierenden Polykondensate eingeführt werden. Auf diese Art und Weise ist eine chemische Modifizierung der erfindungsgemäßen Polykondensate möglich. So können z.B. Triacrylate über eine Michael-Addition an eine -$CH_2$-SH Gruppe unter Bildung einer Thioether-Gruppe addiert werden. Weitere Beispiele einer chemischen Modifikation ist die Bildung von Urethan- bzw. Harnstoff Derivaten durch Addition von Isocyanat-Verbindungen an -$CH_2$-OH bzw. -$CH_2$-$NH_2$ Gruppen der Polykondensate.

Bis zu 90 Mol-% der Verbindungen der allgemeinen Formel II können durch eine oder mehrere Verbindungen der allgemeinen Formeln III und/oder IV und/oder V ersetzt sein. In bevorzugten Ausgestaltungen der erfindungsgemäßen Kieselsäurepolykondensate sind nicht mehr als 80 Mol-% der Verbindungen der allgemeinen Formel II durch Verbindungen der allgemeinen Formel III und/oder IV und/oder V ersetzt.

Weitere Ausgestaltungen der erfindungsgemäßen Kieselsäurepolykondensate sind dadurch erhältlich, dass dem Reaktionsmedium vor und/oder während und/oder nach der Kondensation organisch modifizierte, erfindungsgemäße Kieselsäurepolykondensate als Harz und/oder als Partikel zugesetzt werden. Dies bietet den Vorteil, verschiedene Eigenschaften verschiedener Harz- bzw. Harzpartikel-Systeme kombinieren zu können. Die Eigenschaften der resultierenden Polykondensate, wie z.B. Brechungsindex, thermischer Ausdehnungskoeffizient oder Polymerisationsschrumpf, können auf diese Weise den Anforderungen des jeweiligen Anwendungsfalles angepasst werden.

Die Herstellung der erfindungsgemäßen Kieselsäurepolykondensate erfolgt in einem einstufigen, wasserfreien Verfahren. Bei der Syntheseroute wird kein Wasser als Edukt eingesetzt. Dadurch wird eine eindeutige Reaktionsroute erzwungen und Nebenreaktionen werden unterdrückt. Durch die Gegenwart einer Base und durch eine erhöhte Reaktionstemperatur, z.B. bei 50 °C, wird eine kurze Reaktionszeit und eine nahezu stöchiometrische Umsetzung der Edukte erreicht.

Werden zwei oder mehr Verbindungen der allgemeinen Formel I und/oder II miteinander kondensiert, so werden durch die erfindungsgemäße Reaktionsführung alle Edukte homogen in das erfindungsgemäße Kieselsäurepolykondensat einkondensiert. Durch diese homogene Kondensation ist es möglich, den Brechungsindex der resultierenden Kieselsäurepolykondensate gezielt und stufenweise einzustellen (Indextuning).

Die entstandene Kieselsäurepolykondensat/Alkohol-Mischung wird bei erhöhter Temperatur bis zum vollständigen Entzug der flüchtigen Bestandteile eingeengt. Anhand der Gewichtsabnahme gemäß der stöchiometrischen Gleichung kann die Vollständigkeit der Reaktion verfolgt werden. Die Gesamtmasse des Ansatzes nimmt exakt um die im Voraus berechnete Masse der flüchtigen Bestandteile ab. Die Analyse der entfernten flüchtigen Bestandteile bestätigt die Annahmen bezüglich der Stöchiometrie der Umsetzung.

Die erfindungsgemäßen Kieselsäurepolykondensate können entweder als solche verwendet werden oder in Zusammensetzungen, die zusätzlich an den Verwendungszweck angepasste Additive enthalten, z.B. übliche Lackadditive, Füllstoffe, Photoinitiatoren, thermische Initiatoren, Verlaufmittel und Pigmente.

Überraschenderweise wurde festgestellt, dass die erfindungsgemäßen Polykondensate besonders lagerstabil sind. Auch bei längerer Lagerung bei Raumtemperatur (beobachtet über einen Zeitraum von 1 Jahr) vergelen sie nicht. Aus dem Stand der Technik bekannte Epoxid-Harze zeigen eine nur geringe Lagerstabilität. Schon nach kurzer Zeit nimmt die Zahl der Epoxy-Gruppen ab und die Viskosität dieser Harze steigt. Überraschenderweise wurde festgestellt, dass sogar erfindungsgemäße Polykondensate mit Epoxy-Gruppen die oben beschriebene, ausgezeichnete Lagerstabilität zeigen. Mit den erfindungsgemäßen Polykondensaten sind also Epoxid-Harze mit ausgezeichneter Lagerstabilität zugänglich.

Die erfindungsgemäßen Kieselsäurepolykondensate weisen keine oder nur eine geringe Anzahl von SiOH-Gruppen auf. Sie sind UV-härtbar und sie sind im NIR durchlässig, wobei insbesondere die Durchlässigkeit bei Wellenlängen von 1310 nm und 1550 nm für eine technische Anwendung in der optischen Datenverarbeitung von Bedeutung ist. Die Härtung, d.h. die Polymerisation der C=C-Doppelbindungen bzw. der Epoxy-Gruppen, erfolgt mit hinreichend geringem Schrumpf. Dadurch wird sogar bei hohen Schichtdicken eine Rissbildung vermieden. Es wird angenommen, dass dafür das Fehlen von Si-OH-Gruppen und von flüchtigen Bestandteilen in den erfindungsgemäßen Kieselsäurepolykondensaten verantwortlich ist. Die erfindungsgemäßen Kieselsäurepolykondensate sind außerdem in Schichtdicken bis zu 150 μm ohne Qualitätsverlust fotostrukturierbar. Diese Eigenschaften machen die erfindungsgemäßen Kieselsäurepolykondensate für einen Einsatz als Photoresists, als Negativresist, als Dielektrikum, als Licht leitendes, transparentes Material oder als fotostrukturierbaren, isolierenden Werkstoff für die Mikrosystemtechnik außerordentlich geeignet. Gerade in der Mikrosystemtechnik werden fotostrukturierbare Materialien benötigt, die eine hohe Reproduzierbarkeit der Materialeigenschaften wie Viskosität, Löslichkeit, Wassergehalt etc. erfordern. Hierfür sind die erfindungsgemäßen Kieselsäurepolykondensate bestens geeignet. Sie zeigen eine sehr gute Reproduzierbarkeit aller Materialeigenschaften, wie z.B. des Brechungsindex (± 0.001), der optischen Dämpfung und der Verarbeitbarkeit in allen Prozess-Schritten der UV-Strukturierung.

Die erfindungsgemäßen Kieselsäurepolykondensate sind anorganisch abreagiert und zeigen während des thermischen Aushörtungsprozesses eine verminderte Freisetzung von flüchtigen Bestandteilen, wie Wasser oder Alkohol, und sie sind damit gut prägbar.

Der Einsatz der erfindungsgemäßen Kieselsäurepolykondensate ist nicht nur auf die vorgenannten Anwendungen beschränkt. Überall dort, wo organisch modifizierte Kieselsäurepolykondensate als kratzfeste Beschichtungen für die unterschiedlichsten Substrate, als Kleb- und Dichtungsmassen oder bei der Herstellung von Formkörpern Verwendung finden, können die erfindungsgemäßen Kieselsäurepolykondensate wegen ihrer ausgezeichneten Materiateigenschaften eingesetzt werden. Die erfindungsgemäßen Kieselsäurepolykondensate haften ausgezeichnet auf den unterschiedlichsten Substraten, wie z.B. auf Metallen, auf Glas oder auf oxidischen Oberflächen. Bei den Metallen sind insbesondere die Haftung auf Aluminium und auf Silicium zu nennen.

Die erfindungsgemäßen Kieselsäurepolykondensate oder diese enthaltende Zusammensetzungen eignen sich damit bestens zur Herstellung von Beschichtungs-, Füllstoff- oder Bulkmaterialien, von Klebstoffen und Spritzgussmassen, von Fasern, Folien, Haftvermittlern, von Abformmassen und von Einbettmaterialien. Spezielle Anwendungsgebiete sind z.B. die Beschichtung von Substraten aus Metall, Kunststoff, Papier, Keramik etc. durch Tauchen, Gießen, Streichen, Spritzen, elektrostatisches Spritzen, Elektrotauchlackierung etc., der Einsatz für optische, optoelektrische oder elektronische Komponenten, die Herstellung von Füllstoffen, abriebfesten Korrosionsschutzbeschichtungen, die Herstellung von Formkörpern, z.B. durch Spritzguss, Formgießen oder Extrusion, und die Herstellung von Compositen, z.B. mit Fasern, Füllstoffen oder Geweben.

Nach der Polykondensation und vor der Weiterverarbeitung können dem Polykondensat zur Verdünnung Lösungsmittel zugesetzt werden. Die endgültige Härtung der erfindungsgemäßen Polykondensate erfolgt , gegebenenfalls nach Zugabe geeigneter Initiatoren, thermisch oder fotochemisch, wobei diese Härtungsmechanismen auch parallel und/oder nacheinander ablaufen können. Dabei werden im Zuge der Polymerisation bzw. Polyaddition die C=C-Doppelbindungen bzw. die Epoxy-Gruppen miteinander verknüpft, und es wird das organische Netzwerk aufgebaut. Aufgrund der relativ hohen Molekulargewichte der erfindungsgemäßen Polykondensate erfahren diese bei der Härtung nur eine geringe Volumenschrumpfung.

Es ist auch möglich, dem erfindungsgemäßen Polykondensat vor der endgültigen Härtung, also z.B. vor der Polymerisation, weitere ionisch und/oder radikalisch polymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen verläuft. Ionisch polymerisierbare Verbindungen, die zugesetzt werden können, enthalten z.B. Ringsysteme, die kationisch, Ring öffnend polymerisierbar sind, wie etwa Spiroorthoester, Spiroorthocarbonate, bicyclische Spiroorthoester, Mono- oder Oligoepoxide oder Spirosilane. Es können aber auch Verbindungen zugesetzt werden, die sowohl ionisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Erfolgt die Härtung der endungsgemäßen Polykondensate fotochemisch, so werden diesen Photoinitiatoren zugesetzt und bei thermischer Härtung thermische Initiatoren. Der Initiator kann in üblichen Mengen zugegeben werden. So kann z.B. einer Mischung, die 30 bis 50 Gew.-% Feststoff (Polykondensat) enthält, Initiatoren in einer Menge von z.B. 0.5 bis 5 Gew.-%, insbesondere von 1 bis 3 Gew.-%, bezogen auf die Mischung zugesetzt, werden.

Als Photoinitiatoren können z.B. die im Handel erhältlichen eingesetzt werden. Beispiel hierfür sind Irgacure 184 (1-Hydroxycyclohexylphenylketon), Irgacure 500 (1-Hydroxycyclohexylphenylketon/Benzophenon), und andere von Ciba-Geigy erhältliche Photoinitiatoren vom Irgacure-Typ; Darocure 1173, 1116, 1398, 1174 und 1020 (erhältlich

von der Firma Merck), Benzophenon, 2-Chlorthioxanthon, 2-Methylthioxanthon, 2-Iso-propylthioxanthon, Benzoin, 4.4'-Dimethoxybenzoin etc. Erfolgt die Härtung mit sichtbaren Licht, so kann als Initiator z.B. Campherchinon eingesetzt werden.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, t-Butyfperbenzoat und Azobisisobutyronitril.

Ist das erfindungsgemäße Polykondensat mit einem Lösungsmittel verdünnt, so lässt man dieses vorzugsweise vor der Härtung abtrocknen. Danach kann es, in Abhängigkeit von der Art des Initiators, thermisch oder fotochemisch in an sich bekannter Weise gehärtet werden. Selbstverständlich sind auch Kombinationen der Härtungsmethoden möglich.

Erfolgt die Härtung des erfindungsgemäßen Polykondensats durch Bestrahlen, so kann es sich von Vorteil erweisen, nach der Strahlungshärtung eine thermische Härtung anzuschließen, insbesondere um noch vorhandenes Lösungsmittel zu entfernen oder um noch weitere reaktive Gruppen in die Härtung miteinzubeziehen.

Die Strukturierung der erfindungsgemäßen Polykondensate erfolgt fotochemisch, gegebenenfalls werden übliche Initiatoren zugesetzt. Geeignete Initiatoren sind z.B. die Irgacure®-Produkte der Firma CIBA oder die Cyracure®-Produkte der Firma Union-Carbide. Es können sowohl Polykondensate mit C=C-Doppelbindungen (radikalisch initiiert) als auch solche mit Epoxy-Gruppen (ionisch induziert) fotochemisch strukturiert werden.

Anhand von Ausführungsbeispielen werden die erfindungsgemäßen Kieselsäurepolykondensate näher erläutert.

Beispiel 1 :

| | | | |
|---|---|---|---|
| Edukte | (1) | Diphenylsilandiol | 1 mol |
| | (2) | 3-Methacryloxypropyltrimethoxysilan | 1 mol |
| | (3) | Bariumhydroxidmonohydrat | 0.4 g (0.002 mol) |

Synthese

Die Komponente (1) wird vorgelegt. Dann wird (2) und zum Schluss (3) zugegeben. Die Mischung wird auf 80 °C erwärmt und unter Rückfluss-Kühlung stark gerührt. Nach 4 Minuten ist eine klare Lösung entstanden, nach 15 Minuten ist die Reaktion beendet. Die resultierende Lösung wird bei 80 °C unter reduziertem Druck eingeengt, zunächst 40 Minuten bei 670 mbar. Dann wird der Druck langsam, innerhalb von 20 Minuten, auf 400 mbar und anschließend stufenweise auf 6 mbar gesenkt und eine Stunde lang bei diesem Wert belassen. Anschließend wird bei 6 mbar, zur vollständigen Entfernung des bei der Reaktion gebildeten Methanol, die Temperatur für eine Stunde auf 90 °C erhöht. Das resultierende Harz wird im Anschluss 0.2 μm druckfiltriert.

Optische Eigenschaften des resultierenden Harzes:

Das resultierende Harz zeigt im IR-Spektrum keine Si-OH-Gruppen.

Brechungsindex bei 25 °C = 1.5382.
Optische Dämpfung im NIR = 0.30 dB/cm bei 1310 nm
= 0.65 dB/cm bei 1550 nm.

Reproduktion des Experimentes

| | | | |
|---|---|---|---|
| Edukte | (1) | Diphenylsilandiol | 1 mol |
| | (2) | 3-Methacryloxypropyltrimethoxysilan | 1 mol |
| | (3) | Bariumhydroxidmonohydrat | 0.4 g (0.002 mol) |

Die Synthese wird wie oben beschrieben durchgeführt.

Optische Eigenschaften des resultierenden Harzes:

Das resultierende Harz zeigt im IR-Spektrum keine Si-OH-Gruppen.

Brechungsindex bei 25 °C = 1.5382.
Optische Dämpfung im NIR = 0.30 dB/cm bei 1310 nm
= 0.65 dB/cm bei 1550 nm.

Die Viskosität dieser beiden Harze und vier weiterer (nach der gleichen Synthese) liegt bei 5.2 ± 0.4 Pa•s.

Beispiel 2:

| | | | |
|---|---|---|---|
| Edukte | (1) | Diphenylsilandiol | 95.18 g (0.44 mol) |
| | (2) | 3.3.3-Trifluorpropyltrimethoxysilan | 48.02.g (0.22 mol) |
| | (3) | 3-Methacryloxypropyltrimethoxysilan | 54.64 g (0.22 mol) |
| | (4) | Bariumhydroxidmonohydrat | 0.15 g (0.0008 mol) |

Synthese

Die Komponente (1) wird vorgelegt. Dann wird (3) und (2) und zum Schluss (4) zugegeben. Die Mischung wird auf 80 °C erwärmt und unter Rückfluss-Kühlung stark gerührt. Nach 4 Minuten ist eine klare Lösung entstanden, nach 15 Minuten ist die Reaktion beendet. Die resultierende Lösung wird bei 80 °C unter reduziertem Druck eingeengt, zunächst 40 Minuten bei 670 mbar. Dann wird der Druck langsam, innerhalb von 20 Minuten, auf 400 mbar und anschließend stufenweise auf 6 mbar gesenkt und eine Stunde lang bei diesem Wert belassen. Anschließend wird bei 6 mbar, zur vollständigen Entfernung des bei der Reaktion gebildeten Methanol, die Temperatur für eine Stunde auf 90 °C erhöht.

Optische Eigenschaften des resultierenden Harzes:

Das resultierende Harz zeigt im IR-Spektrum keine Si-OH-Gruppen.

Brechungsindex bei 25 °C = 1.5243.
Optische Dämpfung im NIR = 0.27 dB/cm bei 1310 nm
= 0.50 dB/cm bei 1550 nm.

Reproduktion des Experimentes

Die Reproduktion der Synthese ergibt ein Harz mit identischem IR-Spektrum und einem Brechungsindex von 1.5245 bei 25 °C. Die optischen Dämpfungswerte des Harzes im NIR sind im Rahmen der Messgenauigkeit mit den oben genannten identisch.
Gemäß dem in den Beispielen 1 und 2 beschriebenen Syntheseweg wurden noch folgende Harze gefertigt.

Beispiel 3:

| | | | |
|---|---|---|---|
| Edukte | (1) | Diphenylsilandiol | 21.26 g (0.1 mol) |
| | (2) | 3-Methacryloxypropyltrimethoxysilan | 19.87 g (0.08 mol) |
| | (3) | 3-Aminopropyltrimethoxysilan | 3.58 g (0.02 mol) |

Die Kondensation wird durch die 3-Aminopropyl-Gruppe der Komponente (3) katalysiert.

Beispiel 4:

| | | | |
|---|---|---|---|
| Edukte | (1) | Diphenylsilandiol | 21.63 g (0.1 mol) |
| | (2) | 3-Methacryloxypropyltrimethoxysilan | 20.68 g (0.084 mol) |
| | (3) | $Zr(OPr)_4$ | 2.62 g (0.008 mol) |

Die Kondensation wird durch die Komponente (3) katalysiert.

Beispiel 5:

| | | | |
|---|---|---|---|
| Edukte | (1) | Diphenylsilandiol | 95.18 g (0.44 mol) |
| | (2) | 3.3.3-Trifluorpropyltrimethoxysilan | 48.02.g (0.22 mol) |
| | (3) | 3-Methocryloxypropyltrimethoxysilan | 54.64 g (0.22 mol) |
| | (4) | Bariumhydroxidmonohydrat | 0.15 g (0.0008 mol) |

Beispiel 6:

| | | | |
|---|---|---|---|
| Edukte | (1) | Diphenylsilandiol | 21.63 g (0.100 mol) |
| | (2) | 3-Methacryloxypropyltrimethoxysilan | 15.90 g (0.064 mol) |
| | (3) | $Al(O\text{-}s\text{-}Bu)_3$ | 5.91 g (0.024 mol) |

Die Kondensation wird durch die Komponente (3) katalysiert.

Beispiel 7:

| | | | |
|---|---|---|---|
| Edukte | (1) | Diphenylsilandiol | 1.77 g (0.008 mol) |
| | (2) | Tridecafluoro-1.1.2.2-tetra-hydrooctyltriethoxysilan | 4.21 g (0.008 mol) |
| | (3) | Triethylamin | 3 Tropfen |

Die Kondensation wird durch die Komponente (3) katalysiert.

Beispiel 8:

| | | | |
|---|---|---|---|
| Edukte | (1) | Diphenylsilandiol | 108.18 g (0.5 mol) |
| | (2) | 2-(3.4-Epoxycyclohexyl)ethyltrimethoxysilan | 123.19 g (0.5 mol) |
| | (3) | Bariumhydroxidmonohydrat | 0.2 g (0.001 mol) |

Der theoretische Epoxid-Wert des Harzes, der tatsächliche unmittelbar nach der Herstellung, nach 30 Tagen und nach einem Jahr beträgt jeweils 2.4 mmol/g.

Beispiel 9:

| | | | |
|---|---|---|---|
| Edukte | (1) | Diphenylsilandiol | 108.18 g (0.5 mol) |
| | (2) | 3-Methacryloxypropyltrimethoxysilan | 62.09 g (0.25 mol) |
| | (3) | 2-(3.4-Epoxycyclohexyl)ethyltrimethoxysilan | 61.6 g (0.25 mol) |
| | (4) | Bariumhydroxidmonohydrat | 0.2 g (0.001 mol) |

Beispiel 10:

| | | | |
|---|---|---|---|
| Edukte | (1) | Diphenylsilandiol | 21.63 g (0.1 mol) |
| | (2) | 2-(3.4-Epoxycyclohexyl)ethyltrimethoxysilan | 12.32 g (0.05 mol) |
| | (3) | Vinyltrimethoxysilan | 7.41 g (0.05 mol) |
| | (4) | Bariumhydroxidmonohydrat | 0.038 g (0.0002 mol) |

Beispiel 11:

| | | | |
|---|---|---|---|
| Edukte | (1) | Diphenylsilandiol | 108.18 g (0.5 mol) |
| | (2) | 2-(3.4-Epoxycyclohexyl)ethyltrimethoxysilan | 123.19 g (0.5 mol) |
| | (3) | Ammoniumfluorid | 0.05 g (0.0013 mol) |

Der Wassergehalt aller Harze gemäß Beispiel 1 bis 11 liegt unter 0.01 % (= 100 ppm) und wird mittels Karl-Fischer-Titration bestimmt. Alle beschriebenen Harze sind UV-strukturierbar, thermisch rissfrei nachhärtbar bei Temperaturen bis deutlich über 200 °C und in mehreren Schichten übereinander applizierbar. Die thermisch ausgehärteten Schichten zeigen nach Klimatests über 7 Tage keine Veränderung.

## Patentansprüche

**1.** Kieselsäurepolykondensat, erhältlich durch Kondensation von einem oder mehreren organisch modifizierten Silandiolen der allgemeinen Formel I und/oder von diesen abgeleiteten Vorkondensaten,

$$Ar_2Si(OH)_2 \qquad (I)$$

mit einem oder mehreren organisch modifizierten Silanen der allgemeinen Formel II,

$$RSi(OR')_3 \qquad (II)$$

wobei die Kondensation ohne Zugabe von Wasser erfolgt,
wobei das molare Verhältnis der Verbindungen I und II, bezogen auf die Monomeren, 1 : 1 beträgt,
wobei bis zu 90 Mol-% der Verbindung II ersetzt sein können durch eine oder meh-rere cokondensierbare Verbindungen des Bors, des Aluminiums, des Siliciums, des Germaniums, des Titans und des Zirkoniums,
und wobei die Reste gleich oder verschieden sind und folgende Bedeutung haben:

Ar = ein Rest mit 6 bis 20 Kohlenstoff-Atomen und mit mindestens einer aromatischen Gruppe,
R = ein organischer Rest mit 2 bis 15 Kohlenstoff-Atomen und mit mindestens einer Epoxy-Gruppe und/oder

mit mindestens einer C=C-Doppelbindung
R' = Methyl oder Ethyl.

2. Kieselsäurepolykondensat nach Anspruch 1, **dadurch gekennzeichnet, dass** bis zu 90 Mol-% der Verbindung der altgemeinen Formel II ersetzt sind durch eine oder mehrere Verbindungen der allgemeinen Formel III,

$$M(OR'')_3 \quad \text{(III)}$$

in der M Bor oder Aluminium bedeutet, R" einen Alkyl-Rest mit 1 bis 4 Kohlenstoff-Atomen darstellt, und wobei das molare Verhältnis von ersetzter Verbindung II zu Verbindung III 3 : 2 beträgt.

3. Kieselsäurepolykondensat nach Anspruch 1 oder 2, **dadurch gekennzeichnet, dass** bis zu 90 Mol-% der Verbindung der allgemeinen Formel II ersetzt sind durch eine oder mehrere Verbindungen der allgemeinen Formel IV,

$$M'(OR'')_4 \quad \text{(IV)}$$

in der M' Silicium, Germanium, Titan oder Zirkonium bedeutet, R" einen Alkyl-Rest mit 1 bis 4 Kohlenstoff-Atomen darstellt, und wobei das molare Verhältnis von ersetzter Verbindung II zu Verbindung IV 2 : 1 beträgt.

4. Kieselsäurepolykondensat nach einem oder mehreren der Ansprüche 1 bis 3, **dadurch gekennzeichnet, dass** bis zu 90 Mol-% der Verbindung der allgemeinen Formel II ersetzt sind durch eine oder mehrere Verbindungen der allgemeinen Formel V, wobei das molare Verhältnis von ersetzter Verbindung II zu Verbindung V1 : 1 beträgt,

$$R^1Si(OR')_3 \quad \text{(V)}$$

und wobei die Reste gleich oder verschieden sind und folgende Bedeutung haben:

R' = Methyl oder Ethyl,
$R^1$ = $CF_3$-$(CF_2)_n$-$C_2H_4$-, mit n = 0 bis 7,
$R^2HN$-$(CH_2)_3$-, mit $R^2$ = H, $CH_3$, $C_2H_5$ oder $C_2H_4$-$NHR^2$, $H_2N$-$C_2H_4$-NH-$CH_2$-$C_6H_4$-$C_2H_4$-,
substituiertes und unsubstituiertes Alkyl mit 1 bis 8 Kohlenstoff-Atomen, substituiertes und unsubstituiertes Phenyl, Tolyl und Naphthyl.

5. Kieselsäurepolykondensat nach einem oder mehreren der Ansprüche 1 bis 4, **dadurch gekennzeichnet, dass** bis zu 80 Mol-% der Verbindung II ersetzt sind durch eine oder mehrere Verbindungen der allgemeinen Formel III und/oder IV und/oder V.

6. Kieselsäurepolykondensat nach einem oder mehreren der Ansprüche 1 bis 5, dadurch erhältlich, dass Verbindungen der allgemeinen Formel III, IV (mit M' gleich Ti oder Zr) oder V (mit $R^1$ gleich $R_2HN$-$(CH_2)_3$- oder $H_2N$-$C_2H_4$-$NH_2$-$CH_2$-$C_6H_4$- $C_2H_4$-) als Kondensationskatalysator wirken.

7. Kieselsäurepolykondensat nach einem oder mehreren der Ansprüche 1 bis 6, **dadurch gekennzeichnet, dass** der Rest R der allgemeinen Formel II funktionelle Gruppen enthält.

8. Kieselsäurepolykondensat nach einem oder mehreren der Ansprüche 1 bis 7, **dadurch gekennzeichnet, dass** der Rest $R^1$ der allgemeinen Formel V SH- und/oder $NR^*_2$-Gruppen enthält, mit R* gleich Wasserstoff oder Alkyl.

9. Kieselsäurepolykondensat nach einem oder mehreren der Ansprüche 1 bis 8, dadurch erhältlich, dass dem Reaktionsmedium Polysiloxane zugesetzt werden, welche erhalten worden sind durch Umsetzung von organisch modifizierten Silandiolen der allgemeinen Formel I mit organisch modifizierten Silanen der allgemeinen Formel II.

10. Lagerstabiles, UV-härtbares, NIR-durchlässiges und in Schichtdicken von 1 bis 150 µm fotostrukturierbares Kieselsäurepolykondensat nach einem der Ansprüche 1 bis 9.

**11.** Verwendung eines Kieselsäurepolykondensats nach Anspruch 10 als Negativresist.

**12.** Verfahren zur Herstellung der Kieselsäurepolykondensate nach Anspruch 1 durch Kondensation von einem oder mehreren organisch modifizierten Silandiolen der allgemeinen Formel I und/oder von diesen abgeleiteten Vorkondensaten,

$$Ar_2Si(OH)_2 \qquad (I)$$

mit einem oder mehreren organisch modifizierten Silanen der allgemeinen Formel II,

$$RSi(OR')_3 \qquad (II)$$

in Anwesenheit einer Base,
wobei die Kondensation ohne Zugabe von Wasser erfolgt,
wobei das molare Verhältnis der Verbindungen I und II, bezogen auf die Monomeren, 1 : 1 beträgt,
wobei bis zu 90 Mol-% der Verbindung II ersetzt sein können durch eine oder mehrere cokondensierbare Verbindungen des Bors, des Aluminiums, des Siliciums, des Germaniums, des Titans und des Zirkoniums, und wobei die Reste gleich oder verschieden sind und folgende Bedeutung haben:

Ar = ein Rest mit 6 bis 20 Kohlenstoff-Atomen und mit mindestens einer aromatischen Gruppe,
R = ein organischer Rest mit 2 bis 15 Kohlenstoff-Atomen und mit mindestens einer Epoxy-Gruppe und/oder mit mindestens einer C=C-Doppelbindung
R' = Methyl oder Ethyl.

## Claims

**1.** Silicic acid polycondensate which can be obtained by condensation of one or more organically modified silanediols of the general formula I and/or of precondensates derived therefrom,

$$Ar_2Si(OH)_2 \qquad (I)$$

with one or more organically modified silanes of the general formula II

$$RSi(OR')_3 \qquad (II)$$

the condensation being effected without addition of water,
the molar ratio of the compounds I and II relative to the monomers being 1 : 1,
up to 90% by mol of the compound II being able to be replaced by one or more co-condensable compounds of boron, of aluminium, of silicon, of germanium, of titanium and of zirconium,
and the radicals being the same or different and having the following meaning:

Ar = a radical with 6 to 20 carbon atoms and with at least one aromatic group,

R = an organic radical with 2 to 15 carbon atoms and with at least one epoxy group and/or with at least one C=C double bond,

R' = methyl or ethyl.

**2.** Silicic acid polycondensate according to claim 1, **characterised in that** up to 90% by mol of the compound of the general formula II are replaced by one or more compounds of the general formula III,

$$M(OR'')_3 \quad (III)$$

in which M means boron or aluminium, R'' represents an alkyl radical with 1 to 4 carbon atoms and the molar ratio of replaced compound II to compound III being 3 : 2.

**3.** Silicic acid polycondensate according to claim 1 or 2, **characterised in that** up to 90% by mol of the compound of the general formula II are replaced by one or more compounds of the general formula IV,

$$M'(OR'')_4 \quad (IV)$$

in which M' means silicon, germanium, titanium or zirconium, R'' represents an alkyl radical with 1 to 4 carbon atoms, and the molar ratio of replaced compound II to compound IV being 2 : 1.

**4.** Silicic acid polycondensate according to one or more of the claims 1 to 3, **characterised in that** up to 90% by mol of the compound of the general formula II are replaced by one or more compounds of the general formula V, the molar ratio of replaced compound II to compound V being 1 : 1,

$$R^1Si(OR')_3 \quad (V)$$

and the radicals being the same or different and having the following meaning:

$R^1$ = methyl or ethyl,

$R^1$ = $CF_3$-$(CF_2)_n$-$C_2H_4$-, with n = 0 to 7,
$R^2HN$-$(CH_2)_3$-, with $R^2$ = H, $CH_3$, $C_2H_5$ or $C_2H_4$-$NHR^2$, $H_2N$-$C_2H_4$-NH-$CH_2$-$C_6H_4$-$C_2H_4$-,
substituted and unsubstituted alkyl with 1 to 8 carbon atoms,
substituted and unsubstituted phenyl, tolyl and naphthyl.

**5.** Silicic acid polycondensate according to one or more of the claims 1 to 4, **characterised in that** up to 80% by mol of the compound II are replaced by one or more compounds of the general formula III and/or IV and/or V.

**6.** Silicic acid polycondensate according to one or more of the claims 1 to 5, which can be obtained in that compounds of the general formula III, IV (with M' equal to Ti or Zr) or V (with $R^1$ equal to $R_2HN$-$(CH_2)_3$- or $H_2N$-$C_2H_4$-$NH_2$-$CH_2$-$C_6H_4$-$C_2H_4$-) act as condensation catalyst.

**7.** Silicic acid polycondensate according to one or more of the claims 1 to 6, **characterised in that** the radical R of the general formula II contains functional groups.

**8.** Silicic acid polycondensate according to one or more of the claims 1 to 7, **characterised in that** the radical $R^1$ of the general formula V contains SH- and/or $NR^*_2$ groups, with R* equal to hydrogen or alkyl.

**9.** Silicic acid polycondensate according to one or more of the claims 1 to 8, which can be obtained in that polysiloxanes are added to the reaction medium, which have been obtained by means of conversion of organically modified silanediols of the general formula I with organically modified silanes of the general formula II.

**10.** Silicic acid polycondensate, which is stable in storage, UV-hardenable, NIR transparent and photostructurable in layer thicknesses of 1 to 150 µm, according to one of the claims 1 to 9.

**11.** Use of a silicic acid polycondensate according to claim 10 as a negative resist.

**12.** Method for producing the silicic acid polycondensates according to claim 1 by means of condensation of one or more organically modified silanediols of the general formula I and/or of precondensates derived therefrom,

$$Ar_2Si(OH)_2 \quad (I)$$

with one or more organically modified silanes of the general formula II,

$$RSi(OR')_3 \quad (II)$$

in the presence of a base,
the condensation being effected without addition of water,
the molar ratio of the compounds I and II relative to the monomers being 1 : 1,
up to 90% by mol of the compound II being able to be replaced by one or more co-condensable compounds of boron, of aluminium, of silicon, of germanium, of titanium and of zirconium, and the radicals being the same or different and having the following meaning:

Ar = a radical with 6 to 20 carbon atoms and with at least one aromatic group,

R = an organic radical with 2 to 15 carbon atoms and with at least one epoxy group and/or with at least one C=C double bond,

R' = methyl or ethyl.

## Revendications

1. Polycondensat d'acide silicique accessible par condensation d'un ou plusieurs silanediols modifiés organiquement, de formule générale I et/ou de leurs produits de pré-condensation dérivés de ceux ci,

$$Ar_2Si(OH)_2 \quad (I)$$

avec un ou plusieurs silanes modifiés organiquement, de formule générale II

$$RSi(OR')_3 \quad (II)$$

pour lequel la condensation s'effectue sans ajout d'eau,
le rapport molaire des composés I et II - rapporté aux monomères - est 1 : 1, jusqu'à 90 % molaire du composé II peuvent être remplacés par un ou plusieurs composés co-condensables du bore, de l'aluminium, du silicium, du germanium, du titane et du zirconium,
et les restes sont identiques ou différents et ont les significations suivantes :

Ar = un reste ayant de 6 à 20 atomes de carbone et ayant au moins un groupe aromatique,
R = un reste organique ayant de 2 à 15 atomes de carbone et ayant au moins un groupe époxy et/ou ayant au moins une double liaison C=C,
R' = méthyle ou éthyle.

2. Polycondensat d'acide silicique selon la revendication 1,
**caractérisé en ce que**
jusqu'à 90 % molaire du composé de formule générale II sont remplacés par un ou plusieurs composés de formule générale III,

$$M(OR'')_3 \quad (III)$$

dans laquelle M signifie du bore ou de l'aluminium,
R'' représente un reste alkyle ayant de 1 à 4 atomes de carbone

et le rapport molaire du composé II remplacé, au composé III s'élève à 3 : 2.

**3.** Polycondensat d'acide silicique selon la revendication 1 ou 2, **caractérisé en ce que** jusqu'à 90 % molaire du composé de formule générale II remplacés par un ou plusieurs composés de formule générale IV,

$$M'(OR'')_4 \qquad (IV)$$

dans laquelle M' signifie du silicium, du germanium, du titane ou du zirconium, R" représente un reste alkyle ayant de 1 à 4 atomes de carbone et le rapport molaire du composé II remplacé, au composé IV s'élève à 2 : 1.

**4.** Polycondensat d'acide silicique selon l'une ou plusieurs des revendications 1 à 3, **caractérisé en ce que** jusqu'à 90 % molaire du composé de formule générale II sont remplacés par un ou plusieurs composés de formule générale V, pour lequel le rapport molaire du composé II remplacé au composé V s'élève à 1 : 1,

$$R^1Si(OR')_3 \qquad (V)$$

et pour lequel les restes sont identiques ou différents et possèdent la signification suivante :

R' = méthyle ou éthyle
$R^1$ = $CF_3$-$(CF_2)_n$-$C_2H_4$-, avec n = 0 à 7, $R^2HN$-$(CH_2)_3$-, avec $R^2$ = H, $CH_3$, $C_2H_5$ ou $C_2H_4$-$NHR^2$, $H_2N$-$C_2H_4$-NH-$CH_2$-$C_6H_4$-$C_2H_4$-, alkyle substitué et non substitué ayant de 1 à 8 atomes de carbone, phényle substitué et non substitué, tolyle et naphtyle.

**5.** Polycondensat d'acide silicique selon l'une ou plusieurs des revendications 1 à 4, **caractérisé en ce que** jusqu'à 80 % molaire du composé II sont remplacés par un ou plusieurs composés des formules générales III t/ou IV et/ou V.

**6.** Polycondensat d'acide silicique selon l'une ou plusieurs des revendications 1 à 5, **caractérisé en ce que** des composés des formules générales III, IV (avec M' identique à Ti ou Zr) ou V (avec R' identique à $R_2HN$-$(CH_2)_3$- ou $H_2N$-$C_2H_4$-$NH_2$-$CH_2$-$C_6H_4$-$C_2H_4$-) agissent comme catalyseur de condensation.

**7.** Polycondensat d'acide silicique selon l'une ou plusieurs des revendications 1 à 6, **caractérisé en ce que** le reste R de formule générale II renferme des groupes fonctionnels.

**8.** Polycondensat d'acide silicique selon l'une ou plusieurs des revendications 1 à 7, **caractérisé en ce que** le reste $R^1$ de formule générale V renferme des groupes SH- et/ou $NR^*_2$ avec R* égal à hydrogène ou alkyle.

**9.** Polycondensat d'acide silicique selon l'une ou plusieurs des revendications 1 à 8, accessible en ce qu' on ajoute au milieu réactionnel des polysiloxanes qui ont été obtenus par réaction de silanediols modifiés organiquement de formule générale I avec des silanes modifiés organiquement de formule générale II.

**10.** Polycondensat d'acide silicique stable au stockage, durcissable par les rayons UV, transparents aux rayons IRN et photostructurables en épaisseurs de couche de 1 à 150 μm, selon l'une des revendications 1 à 9.

**11.** Utilisation d'un polycondensat d'acide silicique selon la revendication 10 comme photorésist négatif.

**12.** Procédé de production des polycondensats d'acide silicique selon la revendication 1 par condensation d'un ou plusieurs silanediols modifiés organiquement de formule générale I et/ou des produits de pré-condensation dérivés de ceux-ci,

$$Ar_2Si(OH)_2 \quad (I)$$

avec un ou plusieurs silanes modifiés organiquement de formule générale II,

$$RSi(OR')_3 \quad (II)$$

en présence d'une base
selon lequel la condensation s'effectue sans ajout d'eau,
le rapport molaire des composés I et II - rapporté aux monomères - s'élève à 1 : 1, jusqu'à 90 % molaire du composé II peuvent être remplacés par un ou plusieurs composés co-condensables du bore, de l'aluminium, du silicium, du germanium, du titane et du zirconium,
et les restes sont identiques ou différents et ont les significations suivantes :

Ar = un reste ayant de 6 à 20 atomes de carbone et ayant au moins un groupe aromatique,
R = un reste organique ayant de 2 à 15 atomes de carbone et ayant au moins un groupe époxy et/ou ayant au moins une double liaison C=C,
R' = méthyle ou éthyle.